(19) **Europäisches Patentamt**
**European Patent Office**
**Office européen des brevets**

(11) **EP 1 807 294 B1**

(12) **EUROPÄISCHE PATENTSCHRIFT**

(45) Veröffentlichungstag und Bekanntmachung des Hinweises auf die Patenterteilung:
**10.08.2011   Patentblatt 2011/32**

(21) Anmeldenummer: **05808032.6**

(22) Anmeldetag: **20.10.2005**

(51) Int Cl.:
***B60T 8/36*** *(2006.01)*      ***G05D 16/20*** *(2006.01)*

(86) Internationale Anmeldenummer:
**PCT/EP2005/055425**

(87) Internationale Veröffentlichungsnummer:
**WO 2006/042859 (27.04.2006 Gazette 2006/17)**

(54) **VERFAHREN ZUR BERECHNUNG DES STEUERSTROMES EINES ELEKTRISCH STEUERBAREN HYDRAULIKVENTILS**

METHOD FOR CALCULATING THE CONTROL CURRENT OF AN ELECTRICALLY CONTROLLABLE HYDRAULIC VALVE

PROCEDE POUR CALCULER LE COURANT DE COMMANDE D'UNE SOUPAPE HYDRAULIQUE A COMMANDE ELECTRIQUE

(84) Benannte Vertragsstaaten:
**DE FR**

(30) Priorität: **20.10.2004   DE 102004051221**
**20.10.2005   DE 102005050645**

(43) Veröffentlichungstag der Anmeldung:
**18.07.2007   Patentblatt 2007/29**

(73) Patentinhaber: **Continental Teves AG & Co. oHG**
**60488 Frankfurt am Main (DE)**

(72) Erfinder:
• **BURKHARD, Dieter**
**55411 Bingen-Büdelheim (DE)**

• **LOOS, Mirco**
**66583 Elversberg (DE)**
• **ZIMMERMANN, Jochen**
**56357 Oberwallmenach (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
**DE-A1- 10 142 040      DE-A1- 10 200 771**
**DE-A1- 19 707 960      DE-A1- 19 727 945**
**DE-A1- 19 848 960**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 807 294 B1

**Beschreibung**

Die Erfindung betrifft ein Verfahren zum Betreiben eines elektrisch steuerbaren Hydraulikventils, insbesondere eines analog/digitalen Einlassventils einer Radbremse eines Kraftfahrzeugbremssystems, bei dem das Hydraulikventil mit einem Ansteuerstrom beaufschlagt wird.

Bremssysteme von Kraftfahrzeugen weisen üblicherweise eine Anzahl von Reibbremsen auf, die den Rädern des Kraftfahrzeuges zugeordnet sind. Der zum Bremsen benötigte Bremsdruck wird üblicherweise über ein Bremspedal mit einem sogenannten Booster aufgebaut und über einen Hauptbremszylinder mittels einer Bremsflüssigkeit in Hydraulikleitungen zu den Reibbremsen bzw. den Bremszylindern geführt. Dabei kann der Bremsdruck bei Systemen mit Bremskraftunterstützung auch mit geeigneten Motorpumpenaggregaten aufgebaut werden. Bei herkömmlichen Bremssystemen korrespondiert die Stellung des Bremspedals jedoch üblicherweise mit der Stellung der Reibbremsen bzw. mit dem Bremsverhalten des Kraftfahrzeuges.

Bei modernen Kraftfahrzeugbremssystemen ist es dagegen häufig notwendig, dass für die Realisierung von Sicherheitssystemen, wie beispielsweise für ein Antiblockiersystem (ABS) oder ein elektronisches Stabilitätsprogramm (ESP), den Bremsdruck, der an den Reibbremsen anliegt, elektronisch zu modifizieren bzw. elektronisch zu steuern. So liegt bei einem Antiblockiersystem beispielsweise eine vergleichsweise hochfrequente pulsartig verlaufende Bremsdruckanforderung vor, um ein Blockieren der Räder zu vermeiden und so den Bremsweg zu minimieren. Dabei werden Reibbremsen bei einem Blockieren durch das Verringern des Bremsdrucks gelöst, und kurz darauf durch eine Druckerhöhung wieder gesetzt.

Eine derartig dynamische Regelung des Bremsdrucks wird hierbei üblicherweise mit elektrisch steuerbaren Hydraulikventilen realisiert, die in die zu den Reibbremsen führenden Hydraulikleitungen geschaltet sind. Für regenerative Bremssysteme, die zusätzlich zu den Reibbremsen einen elektrischen Generator aufweisen, werden zur Realisierung der Bremsfunktionen neben anderen Komponenten ebenfalls derartige Ventile verwendet. Bei sogenannten "Brake-by-wire"- Bremssystemen, bei denen die Reibbremsen vom Bremspedal hydraulisch entkoppelt gehalten sind, wird der erfasste Bremswunsch auch über elektronisch steuerbare Hydraulikventile im Bremssystem umgesetzt bzw. gesteuert.

Die elektrisch steuerbaren Ventile werden in der Regel über eine elektronische Steuereinheit angesteuert. Bei modernen Generationen von Hydraulikregelvorrichtungen werden dabei zunehmend sogenannte Analog/Digital-Ventile eingesetzt. Diese Ventile sind gewöhnliche Schaltventile, die jedoch derart betrieben werden können, dass eine analoge Druckregelung vorgenommen werden kann. Das Ventil wird dabei über eine elektrische Spule bewegt, durch die üblicherweise ein Wechselstrom fließt. Die durch das Magnetfeld der Spule entstehende Ventilbewegung bzw. die Ventilsteuerung korrespondiert dabei mit dem Effektivwert des Spulenstroms. Bei Einlassventilen von Radbremszylindern sind diese üblicherweise so ausgeführt, dass ein Ventil stromlos geöffnet ist, so dass im stromlosen Zustand der maximale Öffnungsquerschnitt des Ventils eingestellt ist. Durch Ansteuerung eines derartigen Ventils mit einem Ansteuerstrom schließt sich das Ventil dabei mit steigendem Ansteuerstrom zunehmend, bis das Ventil bei Erreichen des sogenannten Öffnungsstroms vollständig geschlossen ist. Um ein derartiges Ventil zuverlässig geschlossen zu halten, wird es mit einem Ansteuerstroms beaufschlagt, der den Öffnungsstrom übersteigt.

Der Öffnungsstrom eines derartigen Ventils ist üblicherweise abhängig von der Druckdifferenz über dem Ventil. Um ein derartiges Ventil dabei beispielsweise im Rahmen eines Bremsregelsystem ziel- und bedarfsgerecht für die jeweilige Situation ansteuern zu können, sind daher üblicherweise in einer zugeordneten Steuereinheit so genannte Öffnungsstromkennlinien hinterlegt, in denen die Abhängigkeit des Öffnungsstroms von der Druckdifferenz tabellarisch oder auch funktional wiedergegeben ist.

Beim Betrieb eines derartigen Ventils wird dieses üblicherweise mit einem Ansteuerstrom beaufschlagt, der möglichst weitgehend mit der gewünschten Öffnungsstellung des Ventils korrespondieren sollte. Das Ventil wird dabei zunächst in der Art einer Vorsteuerung mit diesem Ansteuerstrom beaufschlagt, wobei gegebenenfalls über eine nachfolgende Regelung dieser Stromwert in Abhängigkeit von ermittelten Ist - Parametern nachgeführt werden kann. Unter Rückgriff auf die ohnehin vorhandene Öffnungsstromkennlinie wird ein derartiges Ventil unter Berücksichtigung des Druckgradienten üblicherweise zunächst mit einem Ansteuerstrom beaufschlagt, der dem jeweils entsprechenden Öffnungsstrom, multipliziert mit einem fest gewählten Korrekturterm von beispielsweise 0,8, entspricht. Der für die Einstellung der tatsächlich gewünschten Öffnungsstellung erforderliche Steuerstrom wird sodann über die nachfolgende Regelung eingestellt. Derartige Verfahren zum Betreiben eines elektrisch steverbaren Ventils sind beispiels weise aus der DE 197 07 960 A1 oder der DE 198 48 960 A1 bekannt.

Es hat sich allerdings herausgestellt, dass gerade für elektronisch geregelte Bremssysteme, beispielsweise im Zusammenhang mit ABS - oder ESP-Systemen, die hierfür erforderlichen Regel - oder Stellzeiten vergleichsweise lang sein können und somit die Funktionsfähigkeit des genannten Systems beeinträchtigen können.

Der Erfindung liegt daher die Aufgabe zugrunde, ein Verfahren der oben genannten Art anzugeben, das mit einem oben beschriebenen Ventil eine besonders reaktionsschnelle Druckregelung mit einer möglichst hohen Genauigkeit ermöglicht. Weiterhin soll ein zur Durchführung des Verfahrens besonders geeignetes Bremssystem angegeben werden.

Bezüglich des Verfahrens wird diese Aufgabe erfindungsgemäß gelöst, indem das Hydraulikventil mit einem Ansteuerstrom beaufschlagt wird, der durch Verknüpfung einer bereitgestellten Öffnungsstromkennlinie des Hydraulikventils mit einem Korrekturwert ermittelt wird, wobei der Korrekturwert abhängig von einer Anzahl von für das Hydraulikventil charakteristischen Parametern vorgegeben wird. Zur Berechnung des Ansteuerstroms des Hydraulikventils wird somit ein Öffnungsstrom des Hydraulikventils mit einem Korrekturwert beaufschlagt, der von einer Anzahl von geeigneten gewählten Parametern des Hydraulikventils abhängt.

Die Erfindung geht dabei von der Überlegung aus, dass für eine besonders reaktionsschnelle und präzise Druckregelung bereits der Ansteuerstrom für das Hydraulikventil besonders bedarfsgerecht gewählt werden sollte. Durch eine damit erreichbare Verbesserung bereits der Vorsteuerung des Hydraulikventils kann der Aufwand und damit auch die erforderliche Zeitdauer der nachfolgenden Regelung vermindert oder möglicherweise ganz eliminiert werden. Um diese Verbesserung der Vorsteuerung zu erreichen, sollte eine besonders flexible und am Bedarf, insbesondere auch am Ist - Zustand des Systems, orientierte Bestimmung oder Berechnung des Ansteuerstroms erfolgen. Um das Gesamtsystem dabei aber besonders einfach zu halten, sollte bei der Berechnung des Ansteuerstroms der Rückgriff auf die Öffnungsstromkennlinie beibehalten werden, wobei die gewünschte Flexibilität durch eine geeignete Wahl des hinzugezogenen Korrekturstroms erreicht werden kann.

Der Korrekturwert entspricht dabei zweckmäßigerweise der Differenz von 1 und dem prozentualen Anteil des angeforderten Öffnungsstroms vom maximalen Öffnungsstrom bei vollständig geöffnetem Hydraulikventil.

Für die Ermittlung dieser Korrektur wird der prozentuale Anteil des angeforderten Öffnungsstroms vom maximalen Öffnungsstrom bei vollständig geöffnetem Hydraulikventil vorzugsweise aus dem Quotienten des angeforderten Druckgradienten und dem maximalen Druckgradienten berechnet. Dabei kann der Arbeitsbereich zwischen angefordertem und maximalem Druckgradient bei verschiedenen Differenzdrücken variieren.

Ein so berechneter Korrekturwert wird vorteilhafterweise mit dem Öffnungsstrom des Hydraulikventils multipliziert. Alternativ kann der Arbeitsstrom auch in einem n-dimensionalen Kennlinienfeld abgespeichert werden, wobei n der Anzahl der Eingangsgrößen entspricht.

Erfinchungsgemäß werden als charakteristische Parameter, von denen abhängig der Korrekturterm vorgegeben wird, ein geforderter Druckgradient, die Druckdifferenz am Hydraulikventil, Kombiniert mit der hydraulischen Kapazität des dem Hydraulikventil zugeordneten Radkreises und/oder dem Strömungswiderstand des dem Hydraulikventil zugeordneten Hydraulikkreises gewählt. Die hydraulische Kapazität ist dabei zweckmäßigerweise als das Verhältnis der Volumenaufnahme der strömungsauslassseitigen Volumenänderung zur Druckänderung definiert und entspricht somit der Ableitung der Volumen - Druck - Kennlinie nach dem Druck.

Der Strömungswiderstand hängt unter anderem von der Viskosität des Hydraulikmittels, dem Strömungsquerschnitt sowie der Ausgestaltung des Hydrauliksystems ab. Die genannten Einflussgrößen sind entweder bekannt oder können über eine Messung der unterschiedlichen Drücke, oder aber auch über Messungen des Volumenstroms des Hydraulikmittels ermittelt werden.

Der Korrekturwert wird vorteilhafterweise abhängig von dem Quotienten aus dem Produkt des geforderten Druckgradienten mit dem Strömungswiderstand des dem Hydraulikventil zugeordneten Hydraulikkreises und aus dem Produkt der Druckdifferenz am Hydraulikventil und der hydraulischen Kapazität des dem Hydraulikventil zugeordneten Radkreises vorgegeben.

Um die hydraulische Kapazität zur Berechnung des Druckgradienten zur Verfügung zu stellen, wird diese zweckmäßigerweise punktweise oder als Näherungsfunktion abgespeichert. In alternativer zweckmäßiger Weiterbildung kann die hydraulische Kapazität auch On-Line aus der Ableitung der p-V-Kennlinie (zumindest näherungsweise) berechnet werden.

Für eine Implementierung einer ventilindividuellen Korrektur in einem Hydrauliksystem wird die Öffnungsstromkennlinie vorzugsweise mit einem Einlernwert korrigiert, der von einem Fehlerdruckwert abhängt. Ein Einlernwert kann dabei in einer separaten Subeinheit des Steuersystems berechnet werden. Um dabei eine Anzahl von Fehlerdruckwerten zusammenzufassen bzw. eine kontinuierliche Korrektur zu gewährleisten, wird ein Einlernwert vorteilhafterweise nach einem adaptiven Verfahren ermittelt.

Das Verfahren wird zweckmäßigerweise über eine elektronische Steuereinheit gesteuert und/oder geregelt.

Ein Hydraulikventil, insbesondere ein analog/digitales Hydraulikventil, ist vorzugsweise mit dem beschriebenen Verfahren steuerbar. Derartige Hydraulikventile sind vorteilhafterweise Bestandteile eines Bremssystems, welches zweckmäßigerweise mit dem beschriebenen Verfahren regelbar ist.

Die Vorteile der Erfindung bestehen insbesondere darin, dass durch die Ermittlung des Ansteuerstroms über den jeweiligen Öffnungsstrom und einen von geeigneten Parametern abhängig vorgegebenen Korrekturwert in besonders flexibler Weise bedarfs- und situationsgerecht eine besonders günstige Ansteuerung des jeweiligen Ventils erreichbar ist. In der Art einer besonders bedarfsgerechten und situationsangepaßten Vorsteuerung ist das Ventil dabei besonders schnell und zuverlässig ansteuerbar, so dass ein nachfolgender Regelbedarf besonders gering gehalten werden oder eventuell sogar vollständig entfallen kann.

Die Reduzierung der Zusammenhänge auf einen geschlossenen Algorithmus reduziert außerdem den Speicherbedarf zur Laufzeit der Druckregelung, weil auf zusätzliche Kennlinien verzichtet werden kann. Ein weiterer Vorteil des Verfahrens ist, dass bei der Applikation keine Anpassung der Gradientenkennlinie vorgenommen werden muss, weil alle zur Berechnung notwendigen Eingangsdaten bereits im System vorhanden sind oder gemessen werden können.

Durch den Rückgriff auf die hinterlegte Öffnungsstromkennlinie in der genannten Art ist zudem gewährleistet, dass die Berechnung des Ansteuerstroms derart skalierbar bleibt, dass bei einer Änderung des Ventils lediglich die ÖffnungsstromKennlinie angepaßt oder geändert werden muss, wobei der Algorithmus ansonsten unverändert weiterverwendet werden kann.

Ein Ausführungsbeispiel der Erfindung wird anhand einer Zeichnung näher erläutert. Darin zeigen:

Fig. 1     ein Kraftfahrzeugbremssystem 1,

Fig. 2     schematisch den Regelungsablauf eines analog/digi- talen Einlassventils des Kraftfahrzeugbremssystems nach Figur 1, und

Fig. 3.    die Volumenänderung dV des Hydraulikmittels M des Einlassventils in Abhängigkeit des Differenzdrucks Δ p.

Gleiche Teile sind in allen Figuren mit den gleichen Bezugszeichen versehen.

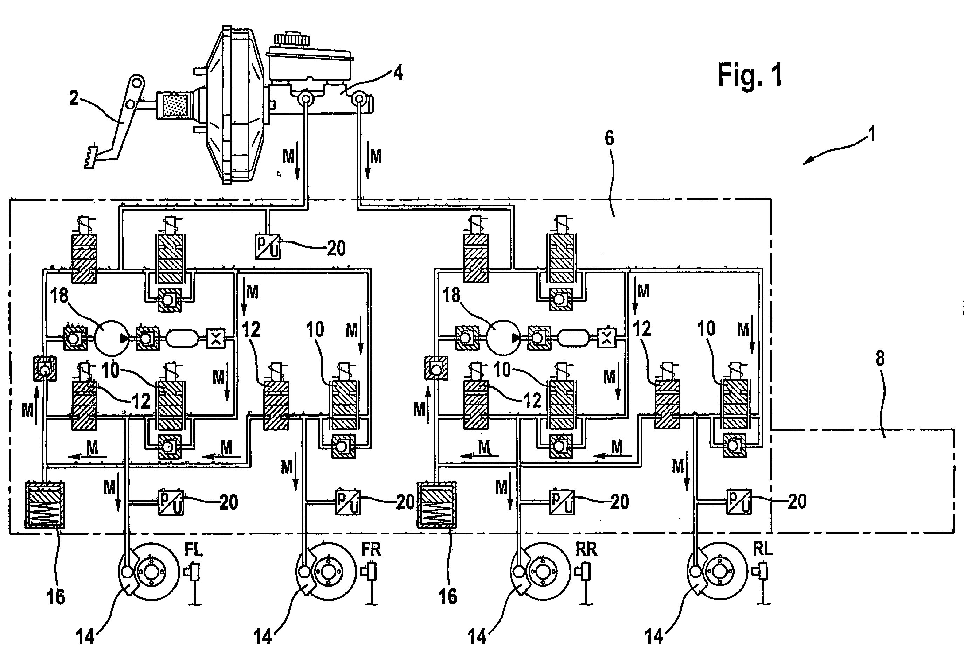

In Figur 1 ist ein Kraftfahrzeugbremssystem 1 dargestellt. Dieses weist im wesentlichen ein Bremspedal 2, einen Tandemhauptzylinder 4, einen Ventilblock 6 und eine elektronische Steuereinheit 8 auf. Die elektronische Steuereinheit 8 weist zur Datenberechnung und Steuerung des Kraftfahrzeugbremssystems 1 ein Mikrocontrollersystem auf, mit dem die im Ventilblock 6 enthaltenen Aktuatoren und Sensoren elektronisch angesteuert werden bzw. ausgelesen werden. Der ventilblock 6 weist zwei Bremskreise auf, die wiederum zwei Raddruckkreise mit jeweils einer Reibbremsen 14 umfassen. In den Raddruckkreisen sind für jede Reibbremse 14 jeweils ein Einlassventil 10 und ein Auslassventil 12 angeordnet. Beim Einlassventil 10 handelt es sich um ein analog/digitales stromlos offenes Trennventil und beim Auslassventil 12 um ein stromlos geschlossenes elektronisches Umschaltventil.

In Auslassrichtung der Auslassventile 12 sind außerdem noch ein Niederdruckspeicher 16 sowie ein Motorpumpenaggregat 18 angeordnet. In den Raddruckkreisen ist weiterhin jeweils vor den Reibbremsen 14 und in der Hauptbremsleitung ausgangseitig des Tandemhauptzylinders 4 jeweils ein Drucksensor 20 angeordnet.

Beim Bremsen werden die Einlassventile 10 geöffnet und Hydraulikmittel M über das Bremspedal 2 mit dem Tandemhauptzylinder 4 zu den Reibbremsen 14 gedrückt. Bei einer dynamischen Erhöhung der Bremsdruckanforderung kann zusätzlicher Bremsdruck mit dem Motorpumpenaggregat 18 aufgebracht werden, während bei einer dynamischen Verringerung der Bremsdruckanforderung Hydraulikmittel M von den Reibbremsen 14 durch das Öffnen der Auslassventile 12 in den Niederdruckspeicher 16 abgeleitet wird.

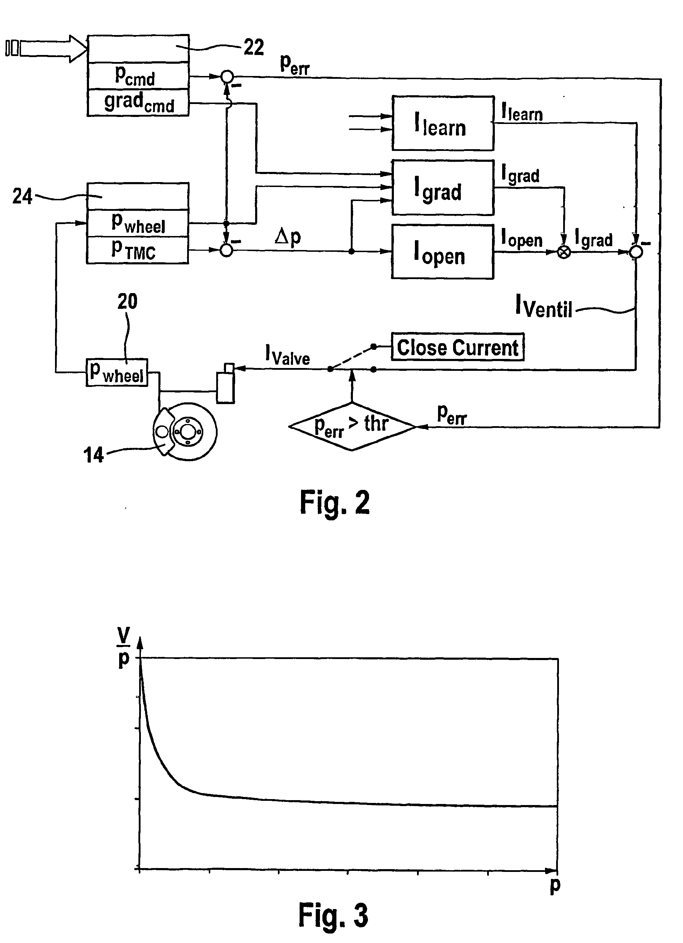

Die elektromagnetischen Einlassventile 10 sind für eine hohe Genauigkeit erfindungsgemäß über eine pulsweitenmodulierte Stromregelung analog über die elektronische Steuereinheit 8 steuerbar. Die Berechnung des Steuerstroms $I_{Ventil}$ ist schematisch in Figur 2 dargestellt. Die Figur zeigt dabei die Methode, mit der ein Einlassventil 10 über die elektronische Steuereinheit eingeregelt wird. Dabei wird der Steuerstrom $I_{Ventil}$ für die Steuerspule des Einlassventils 10 berechnet, wobei im folgenden lediglich die Berechnung des Steuerstroms $I_{Ventil}$ eines Einlassventils 10 beschrieben wird, da die Berechnung für die anderen Einlassventile 10 genauso erfolgt.

Hierzu wird zunächst aus der Öffnungsstromkennlinie $I_{open}(\Delta P)_{table}$ mit der Druckdifferenz $\Delta P$ des Einlassventils 10 der Öffnungsstrom $Io_{pen}$ bestimmt. Als Eingangsgrößen 22 werden der angeforderte Druckgradient $grad_{CMD}$ und die Bremsdruckanforderung $P_{CMD}$ verwendet. Der Druck $P_{Wheel}$ eines Hydraulikmittels M in einem Reibbremszylinder wird dabei durch einen Drucksensor 20 gemessen oder alternativ mit dem mathematischen Druckmodell 24 bestimmt. Der Druck $P_{TMC}$ des Hydraulikmittels M am Tandemhauptzylinder 4 wird ebenfalls mit einem Drucksensor oder Modell 24 ermittelt.

Dieser Öffnungsstrom $I_{Open}$ wird mit einem Korrekturwert $i_{grad}$ beaufschlagt, der von dem angeforderten Druckgradienten $grad_{CMD}$ und der Druckdifferenz am Ventil $\Delta P$ abhängt. Außerdem geht in die Berechnung der Einlernstrom $I_{learn}$ ein. Der Einlernstrom $I_{learn}$ wird hierfür nach einem adaptiven Verfahren ermittelt.

Der maximale Druckgradient $grad_{max}$ berechnet sich zu

$$grad_{max} = \frac{\Delta P_{Valve} * C_{Whl}(P)}{R_H} ,$$ wobei

$R_H$ den Strömungswiderstand und $C_{Whl}$ die hydraulische Kapazität des angrenzenden Hydrauliksystems darstellt. Die hydraulische Kapazität $C_{Whl}$ lässt sich aus der Ableitung des Volumens V des Hydraulikmittels M nach der

Druckänderung dP herleiten: $C_{Whl} = \dfrac{dV}{dP}$

Dieser Zusammenhang ist in Figur 3 zum näheren Verständnis dargestellt.

Hierfür wird der prozentuale Anteil des angeforderten Öffnungsstroms vom maximalen Öffnungsstrom bei vollständig geöffnetem Einlassventil 10 aus dem Quotienten des angeforderten Druckgradienten $grad_{CMD}$ und dem maximalen Druckgradienten $grad_{max}$ berechnet, und dieser prozentuale Wert von 100% subtrahiert, so dass sich für

$$i_{grad} = 1 - Range\left(\frac{grad_{CMD}}{grad_{max}}\right)$$ ergibt, wobei die Range-Funktion den Quotienten auf % normiert und bei 100% nach oben begrenzt ist. Der maximale Druckgradient $grad_{max}$ bei vollständig geöffnetem Einlassventil 10 berechnet sich aus

$$grad_{max} = \frac{\Delta P_{Valve} * C_{Whl}(P)}{R_H}$$ . Der Steuerstrom

$I_{Ventil}$ ergibt sich dann aus dem Produkt des Öffnungsstroms $I_{open}$ und dem Korrekturwert $i_{grad}$: $I_{Ventil} = I_{open}(\Delta P)_{table} \cdot i_{grad}$, und wird der Spule des Einlassventils 10 vorgeben.

**Bezugszeichenliste**

1      Kraftfahrzeugbremssystem
2      Bremspedal
4      Tandemhauptzylinder
6      Ventilblock
8      Steuereinheit
10     Einlassventil
12     Auslassventil
14     Reibbremse
16     Niederdruckspeicher
18     Motorpumpenaggregat
20     Drucksensor
22     Eingangsgrößen
24     mathematisches Druckmodell
M     Hydraulikmittel

**Patentansprüche**

1.   Verfahren zum Betreiben eines elektrisch steuerbaren Hydraulikventils (10), insbesondere eines analog/digitalen Einlassventils (10) einer Reibbremse eines Kraftfahrzeugbremssystems, bei dem das Hydraulikventil (10) mit einem Ansteuerstrom beaufschlagt wird, der durch ständige Verknüpfung einer bereitgestellten Öffnungsstromkennlinie ($I_{open}(\Delta P)_{table}$) des Hydraulikventils (10) mit einem Korrekturwert ($i_{grad}$) ermittelt wird, wobei der Korrekturwert ($i_{grad}$) abhängig von einer Anzahl von für das Hydraulikventil (10) charakteristischen Parametern vorgegeben wird und dieser abhängig von einem geforderten Druckgradienten, von der Druckdifferenz ($\Delta P$) am Hydraulikventil (10), kombiniert mit der hydraulischen Kapazität ($C_{Whl}$) des dem Hydraulikventil (10) zugeordneten Radkreises und/oder dem Strömungswiderstand ($R_H$) des dem Hydraulikventil (10) zugeordneten Hydraulikkreises vorgegeben wird.

2.   Verfahren nach Anspruch 1, bei dem der Korrekturwert ($i_{grad}$) abhängig von dem Quotienten aus dem Produkt des geforderten Druckgradienten mit dem Strömungswiderstand ($R_H$) des dem Hydraulikventil (10) zugeordneten Hydraulikkreises und aus dem Produkt der Druckdifferenz ($\Delta P$) am Hydraulikventil (10) und der hydraulischen Kapazität ($C_{Whl}$) des dem Hydraulikventil (10) zugeordneten Radkreises vorgegeben wird.

3.   Verfahren nach Anspruch 1 oder 2, bei dem die hydraulische Kapazität ($C_{Whl}$) dem Verhältnis strömungsauslasswärtige Volumenänderung (dV) zur Druckänderung (dP) des Hydraulikmittels (M) entspricht.

4.   Verfahren nach einem der Ansprüche 1 bis 3, wobei die hydraulische Kapazität ($C_{Whl}$) punktweise oder als Näherungsfunktion hinterlegt wird.

5.   Verfahren nach einem der Ansprüche 1 bis 4, bei dem der Ansteuerstrom mit einem Einlernwert ($I_{learn}$) korrigiert wird, der von einem Fehlerdruckwert ($P_{err}$) abhängt.

6.   Verfahren nach Anspruch 5, wobei ein Einlernwert ($I_{learn}$) nach einem adaptiven Verfahren ermittelt wird.

7.   Verfahren nach einem der Ansprüche 1 bis 6, bei dem der Ansteuerstrom ($I_{Ventil}$) aus dem Produkt des aus der Öffnungsstromkennline ($I_{open}(\Delta p)_{table}$) ermittelten Öffnungsstroms und dem Korrekturwert ($i_{grad}$) errechnet wird.

8.   Bremssystem (1) mit einer Anzahl von Hydraulikventilen (10), die jeweils mit einem nach dem Verfahren nach einem der Ansprüche 1 bis 7 ermittelten Ansteuerstrom angesteuert werden.

**Claims**

1.   Method for operating an electrically controllable hydraulic valve (10), in particular an analog/digital inlet valve (10) of a friction brake of a motor vehicle brake system, in which method the hydraulic valve (10) is acted on by a drive current which is determined by continuously linking a provided opening current characteristic ($I_{open}(\Delta P)_{table}$) of the hydraulic valve (10) with a correction value ($i_{degree}$), with the correction value ($i_{degree}$) being prespecified as a function of a number of parameters which are characteristic of the hydraulic valve (10), and these parameters being prespecified as a function of a required pressure gradient and the pressure difference ($\Delta P$) at the hydraulic valve (10), combined with the hydraulic capacity ($C_{Whl}$) of the wheel circuit which is associated with the hydraulic valve (10) and/or the flow resistance ($R_H$) of the hydraulic circuit which is associated with the hydraulic valve (10).

2. Method according to Claim 1, in which the correction value ($I_{degree}$) is prespecified as a function of the quotient of the product of the required pressure gradient and the flow resistance ($R_H$) of the hydraulic circuit which is associated with the hydraulic valve (10) and of the product of the pressure difference ($\Delta P$) at the hydraulic valve (10) and the hydraulic capacity ($C_{Whl}$) of the wheel circuit which is associated with the hydraulic valve (10).

3. Method according to Claim 1 or 2, in which the hydraulic capacity ($C_{Whl}$) corresponds to the ratio of the change in volume (dV) in the direction of the flow outlet to the change in pressure (dP) of the hydraulic medium (M).

4. Method according to one of Claims 1 to 3, with the hydraulic capacity ($C_{Whl}$) being stored point by point or as an approximation function.

5. Method according to one of Claims 1 to 4, in which the drive current is corrected with a learn-in value ($I_{learn}$) which depends on an error pressure value ($P_{err}$).

6. Method according to Claim 5, with a learn-in value ($I_{learn}$) being determined in accordance with an adaptive method.

7. Method according to one of Claims 1 to 6, in which the drive current ($I_{valve}$) is calculated from the product of the opening current which is determined from the opening current characteristic ($I_{open}(\Delta P)_{table}$) and the correction value ($i_{degree}$).

8. Brake sytem (1) having a number of hydraulic valves (10) which are each driven by a drive current which is determined in accordance with the method according to one of Claims 1 to 7.

## Revendications

1. Procédé de fonctionnement d'une vanne hydraulique (10) à commande électrique, notamment une vanne d'entrée (10) analogique/numérique d'un frein à friction d'un système de freinage de véhicule automobile, selon lequel la vanne hydraulique (10) est soumise à un courant d'excitation qui est déterminé par combinaison permanente d'une courbe de courant d'ouverture ($I_{open}(\Delta P)_{table}$) de la vanne hydraulique (10) mise à disposition avec un facteur de correction ($i_{grad}$), le facteur de correction ($i_{grad}$) étant prédéfini en fonction d'un nombre de paramètres caractéristiques de la vanne hydraulique (10) et ceux-ci étant prédéfinis en fonction d'un gradient de pression exigé, de la différence de pression ($\Delta P$) au niveau de la vanne hydraulique (10), en combinaison avec la capacité hydraulique ($C_{Whl}$) du circuit de roue associé à la vanne hydraulique (10) et/ou la résistance à l'écoulement ($R_H$) du circuit hydraulique associé à la vanne hydraulique (10).

2. Procédé selon la revendication 1, selon lequel le facteur de correction ($i_{grad}$) est prédéfini en fonction du quotient entre le produit du gradient de pression exigé par la résistance à l'écoulement ($R_H$) du circuit hydraulique associé à la vanne hydraulique (10) et le produit de la différence de pression ($\Delta P$) au niveau de la vanne hydraulique (10) par la capacité hydraulique ($C_{Whl}$) du circuit de roue associé à la vanne hydraulique (10).

3. Procédé selon la revendication 1 ou 2, selon lequel la capacité hydraulique ($C_{Whl}$) correspond au rapport entre la variation de volume (dV) du côté de la sortie de l'écoulement et la variation de pression (dP) du fluide hydraulique (M).

4. Procédé selon l'une des revendications 1 à 3, selon lequel la capacité hydraulique ($C_{Whl}$) est stockée ponctuellement ou sous la forme d'une fonction d'approximation.

5. Procédé selon l'une des revendications 1 à 4, selon lequel le courant d'excitation est corrigé avec une valeur d'apprentissage ($I_{learn}$) qui dépend d'une valeur de pression de défaut ($P_{err}$).

6. Procédé selon la revendication 5, selon lequel une valeur d'apprentissage ($I_{learn}$) est déterminée d'après un procédé adaptatif.

7. Procédé selon l'une des revendications 1 à 6, selon lequel le courant d'excitation ($I_{Ventil}$) est calculé à partir du produit du courant d'ouverture déterminé à partir de la courbe de courant d'ouverture ($I_{open}(\Delta P)_{table}$) par le facteur de correction ($i_{grad}$).

8. Système de freinage (1) comprenant un certain nombre de vannes hydrauliques (10) qui sont respectivement commandées avec un courant d'excitation déterminé selon le procédé selon l'une des revendications 1 à 7.

Fig. 1

**Fig. 2**

**Fig. 3**

**EP 1 807 294 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19707960 A1
- DE 19848960 A1